# EUROPEAN PATENT SPECIFICATION

(11) **EP 1 620 627 B1**
(45) Date of publication and mention of the grant of the patent: **18.06.2014**
(21) Application number: 04729150.5
(22) Date of filing: 23.04.2004
(51) Int. Cl.: E05F 5/02

(54) **MOVEMENTS CONTROLLING MEANS**
BEWEGUNGSSTEUERUNGSVORRICHTUNG
MOYENS DE COMMANDE DE MOUVEMENTS

(30) Priority: 02.05.2003 GB 0310185
(43) Date of publication of application: 01.02.2006
(73) Proprietor: TITUS INTERNATIONAL LIMITED, Iver, Bucks SL0 9HW (GB)
(72) Inventor: VALLANCE, William, Ernest, Taylor, Marlow Bucks SL7 3QB (GB)
(74) Representative: Pendered, Timothy George
(86) International application number: PCT/GB2004/001790
(87) International publication number: WO 2004/097150

(56) References cited:
- DE-U- 20 107 068
- DE-U- 29 907 099
- FR-A- 571 680
- US-A- 1 035 298

## Description

This invention relates to movement controls, and in particular to devices for providing damped control of movable furniture parts such as lids, doors and drawers and drop-down flaps.

It is known to provide a stay for the lid of a piece of furniture such as a linen chest, which acts upon opening of the lid to hold it in an open position and which can be de-activated to allow the lid to close. Some such stays also feature a friction mechanism, which may be adjustable, which is designed to act as a brake to stop the lid from slamming shut.

DE-29907099U shows an example of a damper assembly, according to the preamble of claim 1.

US 1035298 discloses an assembly for controlling relative movement between two members with an elongate element having a helical track.

The present invention aims to improve upon existing movement controls and provides an assembly with the characterising features of claim 1.

By way of example, an embodiment of the invention will now be described with reference to the accompanying drawings, in which:
Figure 1 illustrates a form of movement control assembly according to the invention in use on a piece of furniture, and
Figure 2 is a detail of the clutched drive mechanism of the assembly of Figure 1.

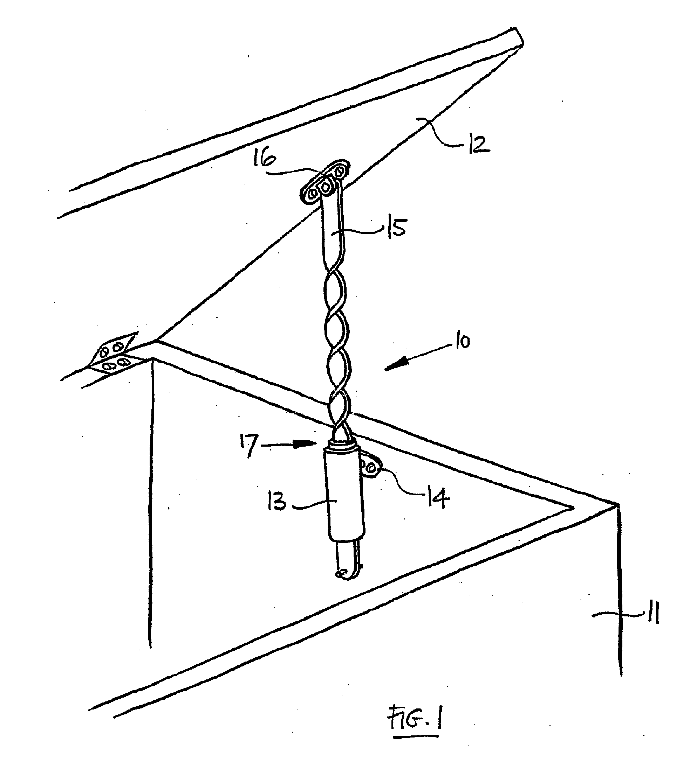

Figure 1 shows a piece of furniture, in this case a linen chest, with a movement control assembly 10 connected between the chest 11 and its hinged lid 12. The assembly 10 comprises a damper 13 which is pivotally connected to the inside of the chest 11 by means of a suitable bracket 14, and an elongate bar 15, pivotally attacked to the lid 12 by means of a suitable bracket 16. The bar is linked to the damper 13 by means of a clutched drive mechanism 17. As will be described in more detail below, movement of the bar 15 when the lid 12 closes causes rotary movement of the damper 13, which thereby imparts damping resistance to the closing movement of the lid.

A suitable damper 13 for use in such an assembly is a so-called rotary shear damper. Rotary shear dampers are known in the art and basically consist of one part which is rotatably movable relative to another, with a medium such as silicon between the two parts to absorb energy and hence provide resistance to the rotary movement, ie damping. Such dampers are available on the market in a number of different sizes and designs and these are referred to herein generally as "rotary shear dampers".

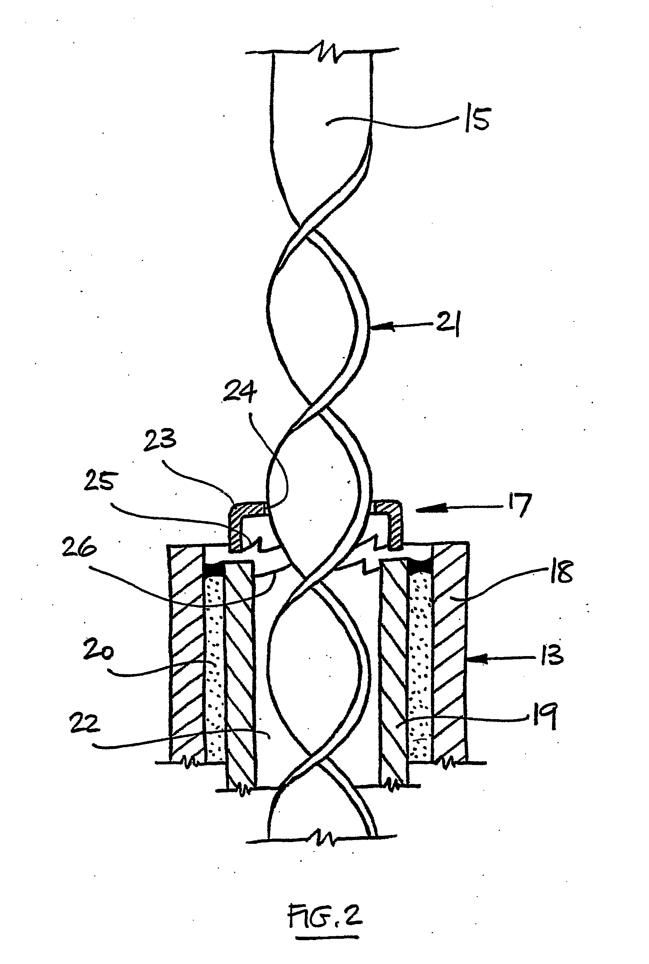

Looking now at Figure 2, it will be seen that the rotary shear damper 13 in this example is in the form of an outer cylindrical casing 18 in which an inner sleeve 19 is rotatably mounted, with the energy-absorbing substance held in the sealed-off annulus 20 between the two.

The elongate bar 15 here is in the form of a flat strip which has been formed with a series of helical twists 21. The bar 15 extends through the bore 22 of the inner sleeve 19 of the damper 13. The clutched drive mechanism 17 by which the bar 15 is arranged to cause rotation of the sleeve 19 comprises a collar 23. The collar 23 has a rectangular slot 24 which slidably receives the bar 15. The collar 23 and bar 15 work together as a movement converter, ie converting the essentially linear movement of the bar into rotary movement of the collar, in the manner of the mechanism of a child's spinning top. Thus, the collar 23 will be caused to rotate by the helical twists 21 in the bar 15 when the bar is moved longitudinally relative to it.

The collar 23 and sleeve 19 are provided with a series of complementary opposed ramped teeth 25, 26 respectively. By this means, in the manner of a dog clutch, rotation of the collar 23 in one direction will drive the sleeve 19 to rotate, whilst rotation of the collar in the opposite direction will not drive the sleeve to rotate. The clutched drive mechanism 17 here is arranged so that the collar 23 will be engaged to drive the sleeve 19 during closing movement of the lid 12, whilst drive is disengaged during its opening movement. By this arrangement, the assembly 10 exerts no effect on the lid 12 when it is opened, but acts to damp its movement as it closes.

It will be appreciated that the configuration of the helical twists 21 formed in the bar 15 may be varied in a number of different ways to give various different damping effects. For example, the pitch of the twists may be increased or decreased. According to the invention, the twists are made variable so that a given longitudinal movement of the bar 15 will produce different actuations of the damper 13. Or, the twists may be separated by a plain section, for example, so as to produce an intermittent actuation of the damper. Varying the rate and/or amount of actuation of the damper affects the damping action that it produces. The lid 12 here, for example, will tend to accelerate as it closes due to gravity and the assembly could thus be tailored to produce a steadily increasing amount of damping action to counteract this.

It will also be appreciated that by adjusting the geometry of the arrangement, ie the positioning of the pivotal mountings 14 and 16 relative to each other and to the hinge of the lid 12 itself, the same basic assembly could be used to cater for a range of different lids, in particular, lids of different size and weight.

It will be further understood that the assembly could be readily adapted to provide movement control in any number of different situations where one member is movable relative to another including, for example, doors, drawers and drop-down flaps.

The bar 15 in this embodiment is conveniently made by twisting a standard flat piece of metal. It will be appreciated, however, that other designs could equally well be used for this element. For example, the element could be formed of moulded plastics with perhaps a square or star-shaped cross-section. Or, the element might have a basically circular cross-section with a helical groove formed around its circumference, with the collar having a radially extending lug to engage the groove, akin to the operating mechanism of a spiral ratchet screw driver.

It might also be desired to vary the damping action of the movement control assembly in other ways. For example, in a horizontally-hinged element such as a flap for a shoe rack which opens to an angle of 45° to the vertical, it may be desired to damp movement of the flap during its last 30° of opening and during its last 15° of closing, with no damping in between. This could be achieved by a modification to the assembly shown in Figures 1 and 2, for example, by providing separate clutched drive mechanisms 17 at either end of the damper 13 working in opposite rotational senses. The helical twists 21 in the bar 15 would then be configured and arranged so as to act with a respective collar 23 at one end of the damper 13 to produce damping during a chosen range of movement of the bar 15 in one direction, whilst the respective collar 23 at the other end of the damper 13 would produce damping during a chosen range of movement of the bar in the opposite direction.

## Claims

1. An assembly for controlling relative movement between two members (11, 12) in a piece of furniture, said assembly comprising a rotary shear damper (13) having one part rotatably movable relative to another part with a damping medium such as silicon held therebetween to absorb energy and hence provide resistance to said relative rotational movement of the parts, means (14) mounting said damper on one of the members (11), an elongate element (15) mounted on the other member (12), and means (17) connecting the elongate element (15) with the damper (13) for activating the damper and causing it to impart a damping resistance to relative movement between the members (11, 12), **characterised in that** the elongate element (15) comprises a belical track (21) and the connecting means includes a collar (23) having a hole therethrough for slidably receiving the helical track (21) so that relative movement between the members (11, 12) in at least one direction causes relative rotational movement of the parts of the damper, and **in that** the helical track (21) is formed with a variable pitch.

2. An assembly as claimed in claim 1 wherein the connecting means (17) is arranged to cause variable relative rotational movement of the parts of the damper (13) over the range of relative movement between the two members (11, 12).

3. An assembly as claimed in claim 1 or claim 2 wherein the connecting means (17) is designed to cause intermittent relative rotational movement of the parts of the damper (13) over the range of relative movement between the two members (11, 12).

4. An assembly as claimed in claim 1, claim 2 or claim 3 wherein the connecting means comprises a clutch mechanism (17) whereby it is prevented from causing relative rotational movement of the parts of the damper (13) during relative movement of the two members (11, 12) in a direction opposite to said one direction.

5. An assembly as claimed in any preceding claim wherein said connecting means (17) is operable to cause relative rotational movement of the parts of the damper (13) for at least a part of relative movement between the two members (11, 12) in both said one direction and in a direction opposite thereto.

6. An assembly as claimed in claim 5 wherein the nature and/or extent of relative rotational movement of the parts of the damper (13) caused by relative movement between the members (11, 12) in said one direction is different from the nature and/or extent of the relative rotational movement of the parts of the damper caused by relative movement between the members (11, 12) in said opposite direction.

7. An assembly as claimed in any preceding claim wherein the elongate element (15) comprises a bar formed with a series of helical twists defining said helical track (21).

8. An assembly as claimed in any one of claims 1 to 6 wherein the elongate element (15) comprises a rod with a helical groove formed therearound defining said helical track (21).

9. An assembly as claimed in claim 7 wherein the collar (23) has a hole (24) therethrough with a cross-section complementary to the cross-section of the elongate element (15).

10. An assembly as claimed in claim 8 wherein the collar (23) has a radially extending lug to engage the helical groove.

11. An assembly as claimed in any one of claims 4 to 8 wherein the clutch mechanism (17) comprises a ramped tooth engagement (25, 26) between the collar (23) end the damper (13).

12. A piece of furniture comprising a movement control assembly as claimed in any preceding claim.

## Patentansprüche

1. Anordnung zur Steuerung einer relativen Bewegung zwischen zwei Gliedern (11, 12) in einem Möbelstück, wobei die Anordnung einen rotierenden Scherdämpfer (13) umfasst, der einen drehbar relativ zu einem anderen Teil mit einem Dämpfungsmedium, wie Silikon, beweglichen Teil aufweist, der dazwischen gehalten wird, um Energie zu absorbieren und somit Widerstand gegen die relative Drehbewegung der Teile zueinander zu bieten, Mittel (14) zur Befestigung des Dämpfers an einem der Glieder (11), ein längliches Element (15), das am anderen Glied (12) befestigt ist, und Mittel (17) zum Verbinden des länglichen Elements (15) mit dem Dämpfer (13), um den Dämpfer zu aktivieren und Dämpfungswiderstand gegen die relative Bewegung der Glieder (11, 12) zueinander zu bewirken, **dadurch gekennzeichnet, dass** das längliche Element (15) eine Spiralspur (21) aufweist und das Verbindungsmittel einen Bund (23) aufweist, der mit einem Durchgangsloch zur gleitenden Aufnahme der Spiralspur (21) versehen ist, so dass die relative Bewegung der Glieder (11, 12) zueinander in wenigstens einer Richtung eine relative Drehbewegung der Teile des Dämpfers zueinander bewirkt, und dadurch dass die Spiralspur (21) mit variabler Steigung geformt ist.

2. Anordnung nach Anspruch 1, wobei das Verbindungsmittel (17) so angeordnet ist, dass es eine variable relative Drehbewegung der Teile des Dämpfers (13) über den Bereich der relativen Bewegung der zwei Glieder (11, 12) zueinander bewirkt.

3. Anordnung nach Anspruch 1 oder 2, wobei das Verbindungsmittel (17) so gestaltet ist, dass es eine intermittierende relative Drehbewegung der Teile des Dämpfers (13) über den Bereich der relativen Bewegung der Glieder (11, 12) zueinander bewirkt.

4. Anordnung nach Anspruch 1, 2 oder 3, wobei das Verbindungsmittel einen Kupplungsmechanismus (17) aufweist, wodurch es daran gehindert wird, während der relativen Bewegung der zwei Glieder (11, 12) zueinander in einer der einen Richtung entgegengesetzten Richtung eine relative Drehbewegung der Teile des Dämpfers (13) zueinander zu bewirken.

5. Anordnung nach einem der vorhergehenden Ansprüche, wobei das Verbindungsmittel (17) betriebsfähig ist, um eine relative Drehbewegung der Teile des Dämpfers (13) bei wenigstens einem Teil einer relativen Bewegung der zwei Glieder (11, 12) zueinander sowohl in der einen Richtung als auch in einer dieser entgegengesetzten Richtung zu bewirken.

6. Anordnung nach Anspruch 5, wobei die Art und/oder das Ausmaß der relativen Drehbewegung der Teile des Dämpfers (13), die durch die relative Bewegung der Glieder (11, 12) zueinander in der einen Richtung bewirkt wird, sich von der Art und/oder dem Ausmaß der relativen Drehbewegung der Teile des Dämpfers, die durch die relative Bewegung der Glieder (11, 12) zueinander in der entgegengesetzten Richtung bewirkt wird, unterscheidet.

7. Anordnung nach einem der vorhergehenden Ansprüche, wobei das längliche Element (15) einen Stab aufweist, der mit einer Reihe von Spiralwindungen versehen ist, die die Spiralspur (21) definieren.

8. Anordnung nach einem der Ansprüche 1 bis 6, wobei das längliche Element (15) eine Stange mit einer Spiralnut aufweist, die um diese geformt ist und die Spiralspur (21) definiert.

9. Anordnung nach Anspruch 7, wobei der Bund (23) ein Durchgangsloch (24) mit einem dem länglichen Element (15) entsprechenden Querschnitt aufweist.

10. Anordnung nach Anspruch 8, wobei der Bund (23) eine sich radial erstreckende Öse für einen Eingriff mit der Spiralnut aufweist.

11. Anordnung nach einem der Ansprüche 4 bis 8, wobei der Kupplungsmechanismus (17) einen ansteigenden Zahneingriff (25, 26) zwischen dem Bund (23) und dem Dämpfer (13) aufweist.

12. Möbelstück aufweisend eine Bewegungssteuerungsanordnung nach einem der vorhergehenden Ansprüche.

## Revendications

1. Ensemble pour commander un mouvement relatif entre deux éléments (11, 12) dans un meuble, ledit ensemble comprenant un amortisseur de cisaillement rotatif (13) qui présente une partie mobile en rotation par rapport à une autre partie, avec un moyen d'amortissement tel qu'un silicone entre les deux pour absorber l'énergie et par conséquent fournir une résistance au mouvement rotatif relatif desdites parties, des moyens (14) pour monter l'amortisseur sur l'un des éléments (11), un élément oblong (15) monté sur l'autre élément (12), et des moyens (17) qui relient l'élément oblong (15) à l'amortisseur (13) pour activer l'amortisseur et l'amener à offrir une résistance d'amortissement au mouvement relatif entre les éléments (11, 12),
**caractérisé en ce que** l'élément oblong (15) comprend une partie hélicoïdale (21) et les moyens de liaison comportent un collet (23) qui est traversé par un trou pour recevoir de manière coulissante ladite partie hélicoïdale (21), de sorte qu'un mouvement relatif entre les éléments (11, 12) dans au moins une direction provoque un mouvement rotatif relatif des parties de l'amortisseur, et **en ce que** la partie hélicoïdale (21) est formée avec un pas variable.

2. Ensemble tel qu'il est revendiqué dans la revendication 1, étant précisé que les moyens de liaison (17) sont conçus pour provoquer un mouvement relatif variable des parties de l'amortisseur (13) sur la plage de mouvement relatif entre les deux éléments (11, 12).

3. Ensemble tel qu'il est revendiqué dans la revendication 1 ou la revendication 2, étant précisé que les moyens de liaison (17) sont conçus pour provoquer un mouvement relatif intermittent des parties de l'amortisseur (13) sur la plage de mouvement relatif entre les deux éléments (11, 12).

4. Ensemble tel qu'il est revendiqué dans la revendication 1, la revendication 2 ou la revendication 3, étant précisé que les moyens de liaison comprennent un mécanisme d'accouplement (17), qui les empêchent de provoquer un mouvement relatif des parties de l'amortisseur (13) pendant un mouvement relatif des deux éléments (11, 12) dans une direction opposée à ladite direction.

5. Ensemble tel qu'il est revendiqué dans l'une quelconque des revendications précédentes, étant précisé que les moyens de liaison (17) sont aptes à provoquer un mouvement relatif des parties de l'amortisseur (13) pour une partie au moins du mouvement relatif entre les deux éléments (11, 12) à la fois dans ladite direction et dans une direction opposée à celle-ci.

6. Ensemble tel qu'il est revendiqué dans la revendication 5, étant précisé que la nature et/ou l'étendue du mouvement relatif des parties de l'amortisseur (13) provoqué par un mouvement relatif entre les éléments (11, 12) dans ladite direction sont différentes de la nature et/ou de l'étendue du mouvement relatif des parties de l'amortisseur (13) provoqué par le mouvement relatif entre les éléments (11, 12) dans la direction opposée.

7. Ensemble tel qu'il est revendiqué dans l'une quelconque des revendications précédentes, étant précisé que l'élément oblong (15) comprend une barre pourvue d'une série de torsions hélicoïdales qui définissent la partie hélicoïdale (21).

8. Ensemble tel qu'il est revendiqué dans l'une quelconque des revendications 1 à 6, étant précisé que l'élément oblong (15) comprend une tige avec, tout autour, une rainure hélicoïdale qui définit la partie hélicoïdale (21).

9. Ensemble tel qu'il est revendiqué dans la revendication 7, étant précisé que le collet (23) est traversé par un trou (24) avec une section transversale complémentaire de la section transversale de l'élément oblong (15).

10. Ensemble tel qu'il est revendiqué dans la revendication 8, étant précisé que le collet (23) présente une saillie qui s'étend radialement, pour s'accoupler avec la rainure hélicoïdale.

11. Ensemble tel qu'il est revendiqué dans l'une quelconque des revendications 4 à 8, étant précisé que le mécanisme d'accouplement (17) comprend un engagement à dents à rampes (25, 26) entre le collet (23) et l'amortisseur (13).

12. Meuble comprenant un ensemble de commande de mouvement tel qu'il est revendiqué dans l'une quelconque des revendications précédentes.
